# EUROPEAN PATENT SPECIFICATION

(11) **EP 0 435 471 B1**
(45) Date of publication and mention of the grant of the patent: **03.01.1996**
(21) Application number: 90313041.7
(22) Date of filing: 30.11.1990
(51) Int. Cl.: G11B 20/10, G11B 20/18, G11B 5/012, G06F 3/06

(54) **Data recovery system and method for a parallel transfer disk drive**
System und Verfahren zur parallelen Daten-Rückgewinnung von einem Plattenlaufwerk
Système de récupération de données et méthode pour une unité de disques à transmission parallèle

(30) Priority: 22.12.1989 US 456117
(43) Date of publication of application: 03.07.1991
(73) Proprietor: SEAGATE TECHNOLOGY INTERNATIONAL, Georgetown, Grand Cayman Island (KY)
(72) Inventor: Erikson, Wallace J., Eden Prairie, Minnesota 55347 (US); Grivna, Edward L., Brooklyn Park, Minnesota 55443 (US); Todd, Herman T., South St. Paul, Minnesota 55075 (US)
(74) Representative: Sturt, Clifford Mark

(56) References cited:
- EP-A- 0 156 724
- EP-A- 0 278 134
- EP-A- 0 341 852

## Description

The present invention relates to a data recovery system and a data recovery method for a parallel transfer disk drive.

Parallel transfer disk drives generally comprise a plurality of disk platters stacked to rotate as a single unit on a spindle. Each platter has top and bottom surfaces covered with a magnetically polarisable medium. A magnetic transducer associated with each such surface is used to write and read data records (i.e. to generate and detect associated groups of magnetically polarised regions) on the surfaces.

The transducer and the magnetic medium present to one another surfaces that are in essentially constant motion with respect to one another. While the inter-action between the transducer and the magnetic medium is primarily magnetic, the inter-action between their surfaces is mechanical and is affected over time by factors such as friction, wear, medium oxide flaking and collisions between the transducer and the medium. In addition, both individual transducers and magnetic medium surfaces are subject to failures, such as opening of a transducer electro-magnet winding. Such mechanical changes affect the magnetic inter-action of the transducer and the medium, and consequently can affect the ability of data recovery circuitry to read data records from the medium surface. All of these faults can result in partial loss of access to data records from the affected disk drive.

Data recovery circuitry is associated with each magnetic transducer for reading the records. While the operation of such circuitry is not strictly related to the present invention, knowledge of certain characteristics of the inter-action of these circuits with the data records is useful to an understanding of the invention.

Intelligence, in data records, is associated with the relative timings between transitions in the polarisation states of sets of magnetically polarised regions on a magnetic medium surface. To the data recovery circuitry, these transitions appear as transitions in the voltage level of an electrical signal. At least in theory, the meaning of the data record will remain the same regardless of the speed at which the platter on which it is located is moving relative to the transducer, so long as the speed is constant. The clock of a data record is recovered from the data record itself. Accordingly, each data record includes a field near its beginning from which the clock is established. If the data recovery circuitry can recover the clock, recovery of the data can proceed. Where the data recovery circuitry fails to recover the clock, probably as a result of one of the faults described above, data recovery on that channel cannot successfully proceed.

Parallel transfer disk drives achieve high rates of data transfer by the simultaneous transfer of data bytes over a plurality of channels to and from the plurality of available magnetic medium surfaces. In conventional drives, data is recovered serially. The magnetic transducers are supported by a carriage providing for movement of the transducers in unison. Data records are positioned in a plurality of concentric circular tracks, which are located on each magnetic medium surface. The carriage positions the magnetic transducing heads over the same concentric track on each platter, allowing reading and writing of data records at the same address on each platter at substantially the same instant.

Current multi-platter disk drives abort a data recovery operation whenever one of the channels fails in a data recovery attempt. Failures of multi-platter disk drives are more common than failures of single platter disk drives, as a result of the increased number of transducers and magnetic medium surfaces which are inter-acting.

Avoidance of an abort in a data read operation resulting from loss of a channel requires, at a minimum, a data recovery system allowing re-generation of the data of the lost channels. Otherwise, continuation of the read operation would be futile. Schemes for data recovery systems applicable to parallel transfer drives exist. Data in digital processing systems is typically organised into groups of adjacent bits acted upon by the system as a unit. Such units (or "bytes" as they are commonly called) are stored on the disk drive by assigning each bit of the byte to the same logical address on different platters (different transducers). In other words, each logically associated byte is divided among a plurality of physically associated data records. Allowance for loss of the data from a record can be provided through use of redundant data for re-generation of the record.

Examples of redundant data include parity data and error correction code syndromes generated from a logically associated group of data bits, such as a byte. The redundant data for a byte can be generated upon transfer of the byte to the disk drive for storage. The redundant data can then be stored in some fashion, which preserves its relationship with the data group for which it was generated.

The use of redundant data in the form of error detection and correction bits in disc systems having a number of individual disc drives is described in EP-A- 0 278 134 and EP-A- 0 156 724.

It is an object of the present invention to provide a method and system for reading data from a parallel transfer disk drive notwithstanding a fault occurring in a data transmission channel.

According to the present invention, in one aspect, there is provided a data recovery system for a parallel transfer disk drive having a plurality of magnetic transducers, each associated with a respective magnetic data storage medium, the data recovery system having a plurality of data transfer channels for the transfer of data from the magnetic transducers, and clock recovery means for recovering clock signals from the data transferred on each data transfer channel, a window generating circuit for providing a timing window for recovering the clock signals, monitoring means responsive to outputs from the clock recovery means and the window generating circuit for detecting any data transfer channel for which the clock signal is not recovered during the timing window, means for supplying a predetermined data pattern to any said data transfer channel and data regeneration means responsive to detection of said predetermined data pattern for reconstructing data lost from a data transfer channel.

The present invention thus provides a data recovery system for use with a multiple platter parallel transfer disk drive, which is tolerant of a fault in one channel. Data bytes and accompanying parity data may be stored on different platters, corresponding with the different channels, of the parallel transfer disk drive. Failure of a particular channel may then result in substitution of a predetermined data stream in the channel for the lost data. Data stream substitution is preferably initiated whenever recovery of the clock signal for the channel is not ascertained within a certain maximum period at the beginning of a read cycle. Data re-generation may then be effected through parity data generated for the data prior to storage. For example, data re-generation for the lost channel can be executed by an interface/controller between the disk drive and a host data processing system or by the host data processing system itself.

In a preferred embodiment of the invention described below, each channel of the parallel transfer disk drive has an independent clock recovery and data read circuit, which operates to recover the clock signal for data records on each magnetic medium surface. A window generator indicates a pre-determined maximum time period for recovery of the clock signals. An N-1 detect or voter circuit monitors the data recovery circuitry and the clock window circuit to determine the channels not available at the moment of expiration of the window. Failure to recover the clock signal for one channel within the period results in a pre-set data stream being inserted into the channel as a substitute for the absent data. Data insertion allows the system to continue its data read operation. The parity data, in combination with the original data from the available channels, can then be used to re-generate the data stored to the unavailable platter. Failure of two or more channels may result in the interface aborting a read operation.

The present invention in another aspect provides a method of recovering data from a parallel transfer disk drive having a plurality of magnetic transducers, each associated with a respective magnetic data storage medium, said method comprising the steps of supplying data from the magnetic transducers to a plurality of data transfer channels, and recovering clock signals from the data supplied to the data transfer channels, providing a timing window for recovering the clock signals, detecting any data transfer channel for which the clock signal is not recovered during the timing window, and supplying a predetermined data pattern to any said data transfer channel, and reconstructing data lost from a data transfer channel if a predetermined data pattern is detected.

The invention is described further, by way of example, with reference to the accompanying drawings, in which:-
Figure 1 is a block diagram of a multiple channel data read circuit for a multiple platter parallel transfer disk drive;
Figure 2 is a cross sectional schematic view of a multiple platter parallel transfer disk drive; and
Figure 3 is an illustration of a format for a data record stored on one of the platters of the disk drive.

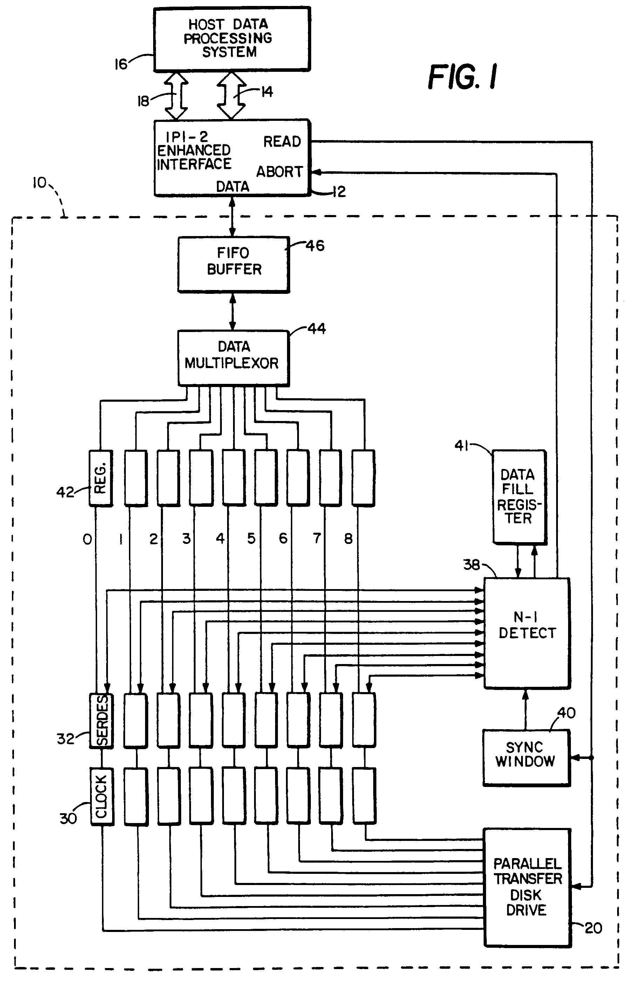

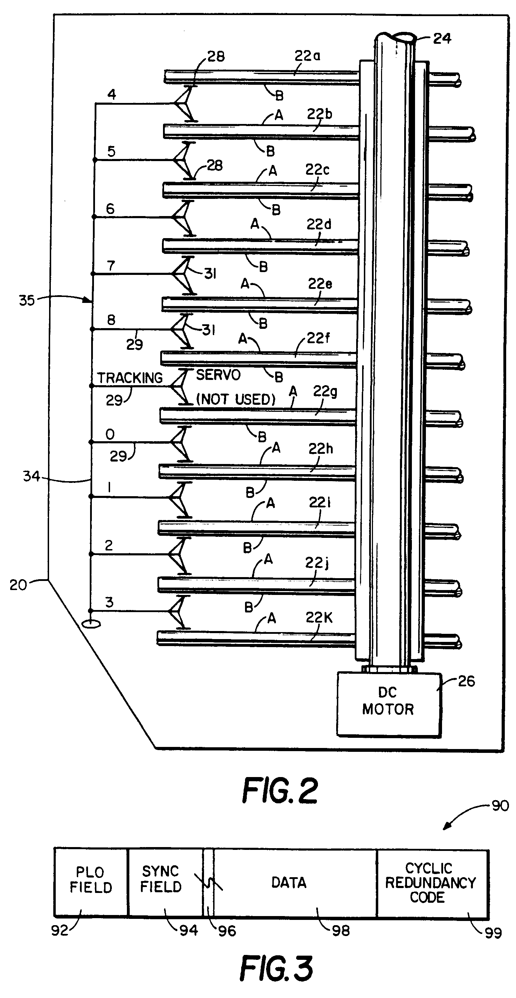

Figures 1 and 2 illustrate a mass data storage system 10. The mass data storage system 10 is connected by an IPI-2 interface 12 and a data bus 14 to a host data processing system 16 for transferring data between the mass data storage system 10 and the host data processing system 16. An address and control bus 18 is also provided between the host data processing system 16 and the interface 12 for transmitting commands from the host data processing system 16, including read commands directing the mass data storage system 10 to execute a recovery operation. The interface 12 is preferably the intelligent peripheral interface "2" (IPI-2) interface for information processing systems magnetic disk drives, established by the American National Standards Institute. The present invention is concerned with data recovery, and accordingly the elements of the system 10 concerned with the reading of data (as opposed to its writing or storage) are illustrated.

The mass data storage system 10 has as its core a multiple platter parallel transfer disk drive 20. The parallel transfer disk drive 20 includes, in the illustrated embodiment, eleven platters 22a to 22k mounted on a spindle 24. The assembly of the spindle 24 and the platters 22a to 22k are spun at a substantially constant angular velocity by a drive motor 26. Each of the platters 22b to 22j, i.e. all of the platters 22 excepting the top-most platter 22a and the bottom-most platter 22k, have accessible top ("A") and bottom ("B") magnetic medium surfaces. The platter 22a has only a bottom accessible magnetic medium surface B and the platter 22k has only a top accessible magnetic medium surface A.

A magnetic transducing head 28 is provided for each accessible magnetic medium surface. The magnetic transducing heads 28 provide both for altering the magnetic domain states of the medium surfaces for storing data records, and for detecting regions of differing magnetic polarisation as a preliminary step to decoding data records. Pairs of the magnetic transducing heads 28 are oriented in opposite directions from pivot arms 29, each head being juxtaposed one of the facing magnetic medium surfaces B and A between two adjacent platters 22.

A positioning system 35 is provided for positioning each magnetic transducing head in an identical position over its respective magnetic medium surface. Each magnetic transducing head 28 is carried by a load arm 31, adjacent pairs of which are attached to the pivot arms 29. The pivot arms 29 are connected to a spindle 34 for joint positioning of all the magnetic transducing heads 28 in unison.

Joint positioning of the magnetic transducing heads 28 makes control over data recovery easier. Data is recorded along concentric circular tracks on the magnetic medium surfaces. As described above, bits from a given byte are distributed among the platters 22, which permits parallel transfer of the byte and thereby reduces the recovery time of the byte as compared to serial recovery schemes. Control of the recovery operation is enhanced where each bit of a byte is located at the same logical address for the different transducing heads 28. It is simplest to provide that the logical addresses are in corresponding physical locations on the platters 22. By moving the transducing heads 28 in unison, they are brought over corresponding data record tracks of the platters 22. Relative movement of a platter 22 and a magnetic transducing head 28 results in generation of a magnetic signal by the transducer related to a data record encountered on the platter. Adjacent pairs of magnetic transducing heads correspond to one of nine channels (0 to 8) employed for data transfer. During a read operation, the signals from the magnetic transducing heads 28 are passed from the parallel transfer disk drive 20 over the channels 0 to 8 to a data and clock recovery circuit 30 corresponding to the respective channel. Each clock recovery circuit 30 comprises phased locked oscillators for recovering the clock signal for each of the pair of data records coming in from the parallel transfer disk drive. Recovered data is passed from the clock recovery circuit 30 to a serialiser/de-serialiser ("Serdes") 32 which operates for time division multiplexing the two data signals on each of the respective channels 0 to 8. Eight channels provide for the transfer of two eight bit bytes of data. The ninth channel allows for transfer of a parity bit of redundant data for each byte.

One of the magnetic transducing heads 28 is dedicated to recovery of positioning information and is marked "tracking". Determination of the position of the magnetic transducing heads 28 is well understood in the art and forms no part of the present invention. Accordingly it is not discussed here further. The output of each serialiser/de-serialiser 32 is monitored by an N-1 detect circuit 38, also known as a voter circuit. The N-1 detect circuit 38 also monitors the output of a synchronisation window signal generator 40. The N-1 detect circuit 38 and the synchronisation window signal generator 40 co-operate to detect a failure in data recovery on one of the channels 0 to 8 and to initiate a data fill operation for a failing channel.

The N-1 detect circuit 38 is connected to each serialiser/de-serialiser circuit 32 by a two way data transmission line. The serialiser/de-serialiser circuits 32 transmit the data stream recovered by the clock recovery circuits 30 to the N-1 detect circuit 38, which monitors the data stream for the appearance of a synchronisation field data pattern associated with each data record. The synchronisation window signal generator 40 times a maximum period allowed for recovery of the synchronisation field data pattern from all of the data and redundant data channels. The duration of the window is a programmable parameter, which is varied depending upon the application of the system.

Figure 3 illustrates an exemplary data record 90. Each data record 90 includes a phase locked oscillator (PLO) field 92, a synchronisation field 94, a data field 98 and a cyclic redundancy code 99. A splice 96 between the synchronisation field 94 and the data field 98 may also be present. A magnetic transducing head executing a read operation will encounter the fields in the order listed. If the read operation functions properly, the clock recovery circuit 30 should recover the clock signal for the data of the data record from the PLO field 92. All the synchronisation fields 94 contain the same, pre-determined, data pattern, allowing determination of whether the clock signal for the record has been successfully obtained. Accordingly, the data pattern for each data record should appear from the output from the serialiser/de-serialiser circuit 32 for each channel within a certain maximum time period.

Returning to Figures 1 and 2, the N-1 detect circuit 38 retrieves a data fill pattern from a programmable data fill register 41 and inserts the pattern into the serialiser/de-serialiser 32 upon occurrence of a single failing channel. Data fill is initiated for a channel upon expiration of the synchronisation window in the absence of detection of the synchronisation field data pattern for that channel. If the synchronisation field data pattern fails to appear on two or more channels, the N-1 detect circuit 38 signals the interface 12 to abort the read operation. The serialiser/de-serialiser circuits 32 transfer data, including the data fill pattern in the case of a failing channel, in parallel to a plurality of two bit buffer registers 42. A time division data multiplexer 44 serialises, i.e. re-assembles on one channel, the data bytes recovered from the parallel transfer disk drive 20. The serial data transmission line from the multiplexer 44 to the interface 12 operates at a much higher frequency than would be possible for data recovered from a single platter disk drive. The bytes are transferred from the multiplexer 44 to a first in first out (FIFO) buffer 46 for transfer upon demand to the interface 12.

Data re-generation can proceed upon detection by the interface 12, or by the host data processing system 16, of the data fill pattern. The host data processing system 16 or interface 12 can identify the presence and the location of bits requiring correction, from the data fill pattern. Either unit can correct the bit values using the remaining data and the parity data. Where the host data processing system 16 carries out the correction, the interface 12 transmits the data onto the data bus 14 for use of the host data processing system 16 without correction.

The invention allows the use of well known parity correction procedures to be extended to parallel transfer disk drives. This affords the user the capability of continuing data recovery notwithstanding the presence of one bad read channel or a critically located medium defect in a parallel transfer disk drive.

## Claims

1. A data recovery system for a parallel transfer disk drive(20)having a plurality of magnetic transducers(28), each associated with a respective magnetic data storage medium (22),the data recovery system having a plurality of data transfer channels (0 to 8) for the transfer of data from the magnetic transducers, and clock recovery means (30) for recovering clock signals from the data transferred on each data transfer channel, a window generating circuit (40) for providing a timing window for recovering the clock signals, monitoring means (38) responsive to outputs from the clock recovery means and the window generating circuit for detecting any data transfer channel for which the clock signal is not recovered during the timing window, means (41) for supplying a predetermined data pattern to any said detected data transfer channel and data regeneration means (12, 16) responsive to detection of said predetermined data pattern for reconstructing data lost from a data transfer channel.

2. A data recovery system according to claim 1 characterised in that means (12) for initiating a read operation are provided, and in that the window generating circuit (40) is arranged to co-operate with the initiating means for starting the timing window.

3. A data recovery system according to claim 1 or 2 characterised in that the timing window represents a maximum period allowed for recovery of the clock signals.

4. A data recovery system according to any of claims 1 to 3 characterised in that the monitoring means (38) are arranged to issue an abort signal on detecting more than a predetermined number of data transfer channels for which the clock signal is not recovered within the timing window.

5. A data recovery system according to any preceding claim characterised in that the inserting means (41) comprise a programmable data fill register.

6. A data recovery system according to any preceding claim characterised by means (12, 16) for re-generating data from a data transfer channel carrying the pre-determined data pattern on the basis of original and redundant data stored on the associated magnetic data storage medium (22) of the parallel transfer disk drive (20).

7. A method of recovering data from a parallel transfer disk drive (20) having a plurality of magnetic transducers (28), each associated with a respective magnetic data storage medium, said method comprising the steps of supplying data from the magnetic transducers to a plurality of data transfer channels (0 to 8), and recovering clock signals from the data supplied to the data transfer channels, providing a timing window for recovering the clock signals, detecting any data transfer channel for which the clock signal is not recovered during the timing window, supplying a pre-determined data pattern to any said data transfer channel and reconstructing data lost from a data transfer channel if a predetermined data pattern is detected.

8. A method according to claim 7 characterised by the further step of aborting the supply of data to the data transfer channels (0 to 8) in response to the detection of greater than a predetermined number of data transfer channels for which the clock signal is not recovered during the timing window.

9. A data recovery system as claimed in any of claims 1 to 6 having a clock recovery circuit (30) associated with each data transfer channel for deriving a clock signal, a clock window circuit (40) providing a time window, a voter circuit (38) monitoring the clock signals derived by the clock of each channel and a clock window generator to determine if the clock signal for each channel is recovered within the time window, and a data fill generator (41) adapted to generate a predetermined data pattern inserting the data stream into a data channel if the clock signal for that channel has not been detected at the expiration of the time window.

10. A method as claimed in claim 7 or claim 8 for recovering data from a multiple platter parallel transfer disk drive and outputting the data on a plurality of channels, where at least one channel is associated with each platter, including the steps of initiating a read operation, attempting to recover clock signals associated with each of a plurality of data records on each platter of the disk drive, generating a clock time window associated with the beginning of the read operation, monitoring for expiration of the clock time window and for recovery of the clock signals and giving indication if a clock signal is not received within the time window, and generating a predetermined data pattern to fill the channel associated with the unrecovered clock signal.

## Patentansprüche

1. Datenrückgewinnungssystem für ein mit Parallelübertragung arbeitendes Plattenlaufwerk (20), das eine Vielzahl von magnetischen Wandlern (28) aufweist, die jeweils einem jeweiligen magnetischen Datenspeichermedium (22) zugeordnet sind, wobei das Datenrückgewinnungssystem eine Vielzahl von Datenübertragungskanälen (0 bis 8) für die Übertragung von Daten von den magnetischen Wandlern und Taktrückgewinnungseinrichtungen (30) zur Rückgewinnung von Taktsignalen aus den an jeden Datenübertragungskanal übertragenen Daten, eine Fenster-Generatorschaltung (40) zur Schaffung eines Zeitfensters zur Rückgewinnung der Taktsignale, Überwachungseinrichtungen (38), die auf Ausgänge von den Taktrückgewinnungseinrichtungen und der Fenster-Generatorschaltung ansprechen, um irgendeinen Datenübertragungskanal zu ermitteln, für den das Taktsignal während des Zeitfensters nicht rückgewonnen wurde, Einrichtungen (41) zur Lieferung eines vorgegebenen Datenmusters an einen auf diese Weise festgestellten Datenübertragungskanal und Datenregenerationseinrichtungen (12, 16) umfaßt, die auf die Feststellung des vorgegebenen Datenmusters zur Rekonstruktion von Daten ansprechen, die von einem Datenübertragungskanal verlorengegangen sind.

2. Datenrückgewinnungssystem nach Anspruch 1,
dadurch gekennzeichnet, daß Einrichtungen (12) zur Einleitung eines Lesevorganges vorgesehen sind, und daß die Fenster-Generatorschaltung (40) so ausgebildet ist, daß sie mit den Einleitungseinrichtungen zusammenwirkt, um das Zeitfenster zu starten.

3. Datenrückgewinnungssystem nach Anspruch 1 oder 2,
dadurch gekennzeichnet, daß das Zeitfenster eine maximale Zeitperiode darstellt, die für die Rückgewinnung der Taktsignale zugestanden wird.

4. Datenrückgewinnungssystem nach einem der Ansprüche 1 bis 3,
dadurch gekennzeichnet, daß die Überwachungseinrichtungen (38) so angeordnet sind, daß sie ein Abbruchsignal abgeben, wenn sie mehr als eine vorgegebene Anzahl von Datenübertragungskanälen feststellen, für die das Taktsignal nicht innerhalb des Zeitfensters rückgewonnen wird.

5. Datenrückgewinnungssystem nach einem der vorhergehenden Ansprüche,
dadurch gekennzeichnet, daß die Einfügungseinrichtungen (41) ein programmierbares Datenfüllregister umfassen.

6. Datenrückgewinnungssystem nach einem der vorhergehenden Ansprüche, gekennzeichnet durch Einrichtungen (12, 16) zur Regeneration von Daten von einem Datenübertragungskanal, der das vorgegebene Datenmuster führt, auf der Grundlage der ursprünglichen und der redundanten Daten, die auf dem zugehörigen magnetischen Datenspeichermedium (22) des mit Parallelübertragung arbeitenden Plattenlaufwerks (20) gespeichert sind.

7. Verfahren zur Rückgewinnung von Daten von einem mit Parallelübertragung arbeitenden Plattenlaufwerk (20), das eine Vielzahl von magnetischen Wandlern (28) aufweist, die jeweils einem jeweiligen magnetischen Datenspeichermedium zugeordnet sind, wobei das Verfahren die Schritte der Zuführung von Daten von den magnetischen Wandlern an eine Vielzahl von Datenübertragungskanälen (0 bis 8) und der Rückgewinnung von Taktsignalen aus den an die Datenübertragungskanäle gelieferten Daten, der Erzeugung eines Zeitfensters für die Rückgewinnung der Taktsignale, der Feststellung irgendeines Datenübertragungskanals, für den das Taktsignal während des Zeitfensters nicht rückgewonnen wurde, der Zuführung eines vorgegebenen Datenmusters an irgendeinen dieser Datenübertragungskanäle und der Rekonstruktion von Daten umfaßt, die von einem Datenübertragungskanal verlorengegangen sind, wenn ein vorgegebenes Datenmuster festgestellt wird.

8. Verfahren nach Anspruch 7,
gekennzeichnet durch den weiteren Schritt des Abbruchs der Zuführung von Daten an die Datenübertragungskanäle (0 bis 8) bei Feststellung einer größeren als einer vorgegebenen Anzahl von Datenübertragungskanälen, für die das Taktsignal während des Zeitfensters nicht zurückgewonnen wird.

9. Datenrückgewinnungssystem nach einem der Ansprüche 1 bis 6, mit einer jedem Datenübertragungskanal zugeordneten Taktrückgewinnungsschaltung (30) zur Ableitung eines Taktsignals, mit einer Taktfensterschaltung (40), die ein zeitfensterliefert, mit einer Mehrheitsentscheidungsschaltung (38), die die von dem Takt jedes Kanals abgeleiteten Taktsignale und einen Taktfenstergenerator überwacht, um festzustellen, ob das Taktsignal für jeden Kanal innerhalb des Zeitfensters zurückgewonnen wird, und mit einem Datenfüllgenerator (41), der zur Erzeugung eines vorgegebenen Datenmusters und zur Einfügung in den Datenstrom eines Datenkanals ausgebildet ist, wenn das Taktsignal für diesen Kanal bei Ablauf des Zeitfensters nicht festgestellt wurde.

10. Verfahren nach Anspruch 7 oder 8 zur Rückgewinnung von Daten von einem eine Vielzahl von Speicherplatten aufweisenden und mit Parallelübertragung arbeitenden Plattenlaufwerk und zur Abgabe der Daten an eine Vielzahl von Kanälen, wobei zumindestens ein Kanal jeder Speicherplatte zugeordnet ist, wobei das Verfahren die Schritte der Einleitung eines Lesevorganges, des Versuchs der Rückgewinnung von Taktsignalen, die jedem einer Vielzahl von Datenblöcken auf jeder Speicherplatte des Plattenlaufwerks zugeordnet sind, der Erzeugung eines Taktzeitfensters, das dem Beginn des Lesevorganges zugeordnet ist, der Überwachung des Ablaufs des Taktzeitfensters und der Rückgewinnung der Taktsignale und der Lieferung einer Anzeige dafür einschließt, daß ein Taktsignal innerhalb des Zeitfensters nicht empfangen wurde, worauf ein vorgegebenes Datenmuster erzeugt wird, um den dem nicht rückgewonnenen Taktsignal zugeordneten Kanal zu füllen.

## Revendications

1. Système de récupération de données pour un lecteur de disque à transfert en parallèle (20) ayant une pluralité de transducteurs magnétiques (28), chacun associé à un support magnétique respectif de stockage de données (22), le système de récupération de données ayant une pluralité de canaux de transfert de données (0 à 8) pour le transfert de données en provenance des transducteurs magnétiques, et un moyen de récupération de signal d'horloge (30) pour récupérer des signaux d'horloge en provenance des données transférées sur chaque canal de transfert de données, un circuit de production de fenêtre (40) pour donner une fenêtre de cadencement pour récupérer les signaux d'horloge, un moyen de suivi (38) sensible aux sorties en provenance du moyen de récupération de signal d'horloge et du circuit de production de fenêtre pour détecter tout canal de transfert de données pour lequel le signal d'horloge n'est pas récupéré pendant la fenêtre de cadencement, un moyen (41) pour délivrer une combinaison de données prédéterminée à un quelconque dit canal de transfert de données détecté et un moyen de régénération de données (12, 16) sensible à la détection de ladite combinaison de données prédéterminée pour reconstruire les données perdues à partir d'un canal de transfert de données.

2. Système de récupération de données selon la revendication 1, caractérisé en ce qu'un moyen (12) pour initier une opération de lecture est prévu, et en ce que le circuit de production de fenêtre (40) est agencé pour coopérer avec le moyen d'initiation pour démarrer la fenêtre de cadencement.

3. Système de récupération de données selon la revendication 1 ou 2, caractérisé en ce que la fenêtre de cadencement représente une période maximale autorisée pour récupérer les signaux d'horloge.

4. Système de récupération de données selon l'une quelconque des revendications 1 à 3, caractérisé en ce que le moyen de suivi (38) est conçu pour fournir un signal d'abandon lors de la détection de plus d'un nombre prédéterminé de canaux de transfert de données pour lesquels le signal d'horloge n'est pas récupéré à l'intérieur de la fenêtre de cadencement.

5. Système de récupération de données selon l'une quelconque des revendications précédentes, caractérisé en ce que le moyen d'insertion (41) comprend un registre programmable de remplissage de données.

6. Système de récupération de données selon l'une quelconque des revendications précédentes, caractérisé par un moyen (12, 16) pour régénérer des données en provenance d'un canal de transfert de données portant la combinaison de données prédéterminée sur la base des données d'origine et redondantes stockées sur le support magnétique associé de stockage de données (22) du lecteur de disque à transfert en parallèle (20).

7. Procédé de récupération de données en provenance d'un lecteur de disque à transfert en parallèle (20) ayant une pluralité de transducteurs magnétiques (28), chacun associé à un support magnétique respectif de stockage de données, ledit procédé comprenant les étapes de délivrance des données en provenance des transducteurs magnétiques à une pluralité de canaux de transfert de données (0 à 8), et de récupération des signaux d'horloge en provenance des données délivrées aux canaux de transfert de données, de fourniture d'une fenêtre de cadencement pour récupérer les signaux d'horloge, de détection de tout canal de transfert de données pour lequel le signal d'horloge n'est pas récupéré pendant la fenêtre de cadencement, de délivrance d'une combinaison de données prédéterminée à un quelconque dit canal de transfert de données et de reconstruction des données perdues à partir d'un canal de transfert de données si une combinaison de données prédéterminée est détectée.

8. Procédé selon la revendication 7, caractérisé par l'étape supplémentaire d'abandon de la délivrance de données aux canaux de transfert de données (0 à 8) en réponse à la détection de plus d'un nombre prédéterminé de canaux de transfert de données pour lesquels le signal d'horloge n'est pas récupéré pendant la fenêtre de cadencement.

9. Système de récupération de données selon l'une quelconque des revendications 1 à 6, ayant un circuit de récupération de signal d'horloge (30) associé à chaque canal de transfert de données pour obtenir un signal d'horloge, un circuit de fenêtre de signal d'horloge (40) donnant une fenêtre temporelle, un circuit de décision en redondance majoritaire (38) suivant les signaux d'horloge obtenus par le signal d'horloge de chaque canal et un générateur de fenêtre de signal d'horloge pour déterminer si le signal d'horloge pour chaque canal est récupéré à l'intérieur de la fenêtre temporelle, et un générateur de remplissage de données (41) conçu pour produire une combinaison de données prédéterminée en insérant le flot de données dans un canal de données si le signal d'horloge pour ce canal n'a pas été détecté à l'expiration de la fenêtre temporelle.

10. Procédé selon la revendication 7 ou la revendication 8, pour récupérer des données en provenance d'un lecteur de disque à transfert en parallèle à plateaux multiples et pour sortir les données sur une pluralité de canaux, où au moins un canal est associé à chaque plateau, incluant les étapes d'initiation d'une opération de lecture, de tentative de récupération des signaux d'horloge associés à chaque enregistrement d'une pluralité d'enregistrements de données sur chaque plateau du lecteur de disque, de production d'une fenêtre temporelle de signal d'horloge associée au commencement de l'opération de lecture, de suivi de l'expiration de la fenêtre temporelle de signal d'horloge et de la récupération des signaux d'horloge et de la fourniture d'une indication si un signal d'horloge n'est pas reçu à l'intérieur de la fenêtre temporelle, et de production d'une combinaison de données prédéterminée pour remplir le canal associé au signal d'horloge non récupéré.
